# EUROPÄISCHE PATENTSCHRIFT

(11) **EP 3 245 424 B1**
(45) Veröffentlichungstag und Bekanntmachung des Hinweises auf die Patenterteilung: **19.02.2020**
(21) Anmeldenummer: 16700432.4
(22) Anmeldetag: 12.01.2016
(51) Int. Cl.: F16H 37/08, F16H 49/00, B25J 9/10, B25J 17/02, F16H 57/00

(54) **GETRIEBE, ELEKTRISCHE ANTRIEBSVORRICHTUNG UND INDUSTRIEROBOTER**
TRANSMISSION, ELECTRIC DRIVING DEVICE AND INDUSTRIAL ROBOT
BOÎTE DE TRANSMISSION, DISPOSITIF D'ENTRAÎNEMENT ÉLECTRIQUE ET ROBOT INDUSTRIEL

(30) Priorität: 13.01.2015 DE 102015200374
(43) Veröffentlichungstag der Anmeldung: 22.11.2017
(73) Patentinhaber: KUKA Deutschland GmbH, 86165 Augsburg (DE)
(72) Erfinder: KRUMBACHER, Rainer, 87675 Rettenbach (DE); LIEBL, Franz, 86551 Aichach (DE)
(74) Vertreter: Böss, Dieter Alexander
(86) Internationale Anmeldenummer: PCT/EP2016/050478
(87) Internationale Veröffentlichungsnummer: WO 2016/113259

(56) Entgegenhaltungen:
- EP-A1- 0 048 904
- WO-A1-2008/077678
- WO-A1-2014/081105
- DE-A1-102010 016 952
- DE-A1-102013 008 757

## Beschreibung

Die Erfindung betrifft ein Getriebe, aufweisend ein Getriebegehäuse, ein im Getriebegehäuse drehbar gelagertes Antriebsglied, ein im Getriebegehäuse drehbar gelagertes Abtriebsglied und wenigstens eine das Abtriebsglied mit dem Antriebsglied koppelnde Übersetzungsgetriebestufe, welche ein Drehmomentabstützglied aufweist. Die Erfindung betrifft außerdem eine elektrische Antriebsvorrichtung und einen Industrieroboter.

Die DE 10 2013 008 757 A1 beschreibt eine Handgelenkeinheit eines Industrieroboters, umfassend ein erstes Handgelenkelement, das um eine erste axiale Linie an einem ersten Gelenk einer vorderen Endseite eines Roboterarms drehbar gelagert ist; ein zweites Handgelenkelement, das um eine zweite axiale Linie an einem zweiten Gelenk einer vorderen Endseite des ersten Handgelenkelements drehbar gelagert ist, wobei die zweite axiale Linie nicht auf einer Verlängerung der ersten axialen Linie liegt und nicht parallel zu der ersten axialen Linie verläuft; ein drittes Handgelenkelement, das um eine dritte axiale Linie an einem dritten Gelenk einer vorderen Endseite des zweiten Handgelenkelements drehbar gelagert ist, wobei die dritte axiale Linie nicht auf einer Verlängerung der zweiten axialen Linie liegt und sich nicht parallel zu der zweiten axialen Linie erstreckt; einen Antriebsmotor für das zweite Handgelenk, der an dem ersten Handgelenkelement oder dem Roboterarm vorgesehen ist, um das zweite Handgelenkelement anzusteuern; einen Antriebsmotor für das dritte Handgelenk, der an dem ersten Handgelenkelement oder dem Roboterarm vorgesehen ist, um das dritte Handgelenkelement anzusteuern; ein exzentrisch schwingendes Untersetzungsgetriebe, das an dem zweiten Gelenk derart vorgesehen ist, dass eine axiale Drehmittellinie mit der zweiten axialen Linie zusammen passt, um eine Drehung des Antriebsmotors für das zweite Handgelenk zu verlangsamen und an das zweite Handgelenkelement zu übertragen, wobei das exzentrisch schwingende Untersetzungsgetriebe einen hohlen Formungsteil umfasst, der einen Hohlkörper entlang der axialen Drehmittellinie bildet; sowie eine durchgehende Welle, die an dem hohlen Formungsteil drehbar gelagert ist und sich durch den Hohlkörper hindurch erstreckt, um eine Drehung von dem Antriebsmotor für das dritte Handgelenk von einer Seite des ersten Handgelenkelements auf eine Seite des zweiten Handgelenkelements zu übertragen; eine Mehrzahl von Kurbelwellen, die um die durchgehende Welle herum angeordnet sind, wobei die Mehrzahl von Kurbelwellen Eingabezahnräder an Enden der Seite des ersten Handgelenkelements aufweist; und ein Getriebeteil, das mittig um die axiale Drehmittellinie drehbar vorgesehen ist, wobei das Getriebeteil ein erstes Zahnrad aufweist, dem eine Drehkraft von dem Antriebsmotor für das zweite Handgelenkelement zugeführt wird, sowie ein zweites Zahnrad, mit dem die Eingabezahnräder der Mehrzahl von Kurbelwellen in Eingriff sind.

Aus der DE 10 2010 016 952 A1 ist ein Harmonic-Drive-Untersetzungsgetriebe für einen Roboter bekannt, mit einem Gehäuse, aufweisend einen in dem Gehäuse ausgebildeten Rahmen; eine an dem Rahmen fixierte Circular Spline mit einem mit Innenverzahnung vorgesehenen Randbereich; eine in die Circular Spline eingefügte zylinderförmige Flexspline mit einem äußeren Randbereich, welcher mit einer im Eingriff mit der Innenverzahnung stehenden Außenverzahnung vorgesehen ist, wobei die Flexspline mit einer Abtriebswelle verbunden ist; und einen in der Flexspline eingepassten elliptischen Wellengenerator, welcher mit einer Antriebswelle verbunden ist.

Die WO 2008/077678 A1 beschreibt eine Vorrichtung zum variablen Antreiben einer Hohlwelle und einer an dieser abgestützten und innenliegenden Welle oder Spindel unter Verwendung von Antriebsvorrichtungen, wobei die Hohlwelle mit der Welle oder Spindel über ein Planetengetriebe oder ein Harmonic-Drive-Getriebe, welches jeweils als Differenzdrehzahlgetriebe aufgebaut ist, gekoppelt ist, sodass ein Synchronlauf von Hohlwelle und Welle oder Spindel über eine einzige Antriebseinrichtung erfolgt.

Die WO 2014/081105 A1 beschreibt ein Getriebe mit einem ersten Antriebszahnrad, das von einem ersten Motor angetrieben ist und einem zweiten Antriebszahnrad, das von einem zweiten Motor angetrieben ist, wobei die beiden Antriebszahnräder über Stirnradstufen und/oder Planetenradsätzen auf eine gemeinsame Abtriebswelle zusammengeführt sind.

Die EP 0 048 904 A1 beschreibt einen Industrieroboter mit einem stationären Karussell, einer Hubsäule und einem an der Hubsäule höhenverstellbar gelagerten Armausleger mit Motoren. Jeder Motor ist jeweils über einen Riementrieb mit einer zugeordneten Welle verbunden, die jeweils eine Eingangswelle eines Getriebes je Freiheitsgrad des Armauslegers bildet.

Aufgabe der Erfindung ist es, eine elektrische Antriebsvorrichtung, insbesondere einen Industrieroboter mit einer solchen elektrischen Antriebsvorrichtung zu schaffen, welche elektrische Antriebsvorrichtung kompakt und insbesondere auch leicht ist.

Die Aufgabe der Erfindung wird gelöst durch eine elektrische Antriebsvorrichtung gemäß Patentanspruch 1 und einen Industrieroboter gemäß Patentanspruch 11.

Indem das Antriebsglied zusammen mit dem Abtriebsglied und dem Drehmomentabstützglied eine vormontierte Baugruppe bildet, bei der das Drehmomentabstützglied mittels einer Getriebestufen-Wälzlagervorrichtung an dem Getriebegehäuse drehbar gelagert ist und eine Verzahnung aufweist, welche mit einem im Getriebegehäuse drehbar gelagerten Antriebsritzel in Eingriff ist, wird ein kompaktes und insbesondere auch leichtes Getriebe geschaffen, bei dem insbesondere die vormontierte Baugruppe von Antriebsglied, Abtriebsglied und Drehmomentabstützglied besonders kompakt baut und dennoch unterschiedliche Getriebekonzepte des vollständigen Getriebes verwirklicht werden können. Eine solche Variabilität wird insbesondere dadurch erreicht, dass das Drehmomentabstützglied mittels einer Getriebestufen-Wälzlagervorrichtung an dem Getriebegehäuse drehbar gelagert ist und eine Verzahnung aufweist, welche mit einem im Getriebegehäuse drehbar gelagerten Antriebsritzel in Eingriff ist.

Wenn demgemäß das Antriebsglied der vormontierten Baugruppe im Getriebegehäuse drehbar gelagert ist, bedeutet dies insbesondere, dass es nicht unmittelbar und direkt an einer Gehäusehälfte des Getriebegehäuses drehbar gelagert ist, sondern vielmehr, dass das Antriebsglied in der vormontierten Baugruppe unmittelbar drehbar gelagert ist und über die Lagerung der Baugruppe wiederum mittelbar im Getriebegehäuse drehbar gelagert ist.

In gleicher Weise verhält es sich mit dem Abtriebsglied der vormontierten Baugruppe. Wenn also demgemäß das Abtriebsglied der vormontierten Baugruppe im Getriebegehäuse drehbar gelagert ist, bedeutet dies insbesondere, dass es nicht unmittelbar und direkt an einer Gehäusehälfte des Getriebegehäuses drehbar gelagert ist, sondern vielmehr, dass das Abtriebsglied in der vormontierten Baugruppe unmittelbar drehbar gelagert ist und über die Lagerung der Baugruppe wiederum mittelbar im Getriebegehäuse drehbar gelagert ist.

Die Übersetzungsgetriebestufe ist Teil der vormontierten Baugruppe. Die Übersetzungsgetriebestufe kann einstufig oder mehrstufig ausgebildet sein. Die Übersetzungsgetriebestufe kann von unterschiedlichen Getriebestufenarten gebildet werden. Die Übersetzungsgetriebestufe überträgt und wandelt ein vom Antriebsglied eingeleitetes Drehmoment mit einem Übersetzungsverhältnis und leitet es auf das Abtriebsglied weiter. So kann die Übersetzungsgetriebestufe beispielsweise schon alleine durch eine Paarung von zwei ineinandergreifenden Zahnrädern gebildet werden, bei denen das eine Zahnrad unmittelbar mit dem Antriebsglied und das andere Zahnrad unmittelbar mit dem Abtriebsglied verbunden ist. Dies kann beispielweise eine einstufige Stirnradstufe sein. Die Übersetzungsgetriebestufe kann beispielsweise aber auch eine Planetenradgetriebestufe oder ein Harmonic-Drive-Untersetzungsgetriebe (Spannungswellengetriebe) sein. Sofern die Übersetzungsgetriebestufe jedoch kein Harmonic-Drive-Untersetzungsgetriebe (Spannungswellengetriebe) aufweist, können die beteiligten Elemente des Untersetzungsgetriebes, insbesondere das Antriebsglied und das Abtriebsglied jeweils aus einem starren Material, d.h. unflexiblen Material gefertigt sein. Die beteiligten Elemente der Übersetzungsgetriebestufe, insbesondere das Antriebsglied und das Abtriebsglied können demgemäß starr, d.h. unflexibel ausgebildet sein. Die Übersetzungsgetriebestufe kann beispielsweise ein einstufiges oder mehrstufiges Stirnradgetriebe sein. Das Antriebsglied und/oder das Abtriebsglied können kreisförmig ausgebildet sein, d.h. insbesondere jeweils eine kreisförmige Umfangskontur aufweisen. Mit dem Antriebsglied kann ein Motor, insbesondere ein elektrischer Motor bzw. ein Antrieb unmittelbar über eine Antriebswelle verbunden sein. Der Motor, insbesondere der elektrische Motor oder der Antrieb kann insoweit ohne zwischengeschaltetem Harmonic-Drive-Untersetzungsgetriebe (Spannungswellengetriebe) mit dem Antriebsglied verbunden sein.

Damit das Antriebsglied zusammen mit dem Abtriebsglied und dem Drehmomentabstützglied eine vormontierte Baugruppe bildet, kann das Abtriebsglied und/oder das Antriebsglied beispielsweise mittels wenigstens eines Wälzlagers drehbar an dem Drehmomentabstützglied gelagert sein. Das drehbare Abtriebsglied und/oder das Antriebsglied kann ergänzend gegen das Drehmomentabstützglied abgedichtet sein. Zur Abdichtung kann zwischen dem Abtriebsglied und dem Drehmomentabstützglied bzw. dem Antriebsglied und dem Drehmomentabstützglied beispielsweise ein Radialwellendichtring angeordnet sein.

Um ein Antriebsglied des Getriebes zu bilden, muss das Antriebsglied der vormontierten Baugruppe relativ zum Getriebegehäuse drehbar sein. In diesem Sinne muss auch, um ein Abtriebsglied des Getriebes zu bilden, das Abtriebsglied der vormontierten Baugruppe relativ zum Getriebegehäuse drehbar sein. Das Drehmomentabstützglied der vormontierten Baugruppe könnte oder sollte jedoch in naheliegender Weise am Getriebegehäuse starr festgelegt sein. Erfindungsgemäß ist jedoch vorgesehen, dass auch das Drehmomentabstützglied der vormontierten Baugruppe drehbar bezüglich des Getriebegehäuses gelagert ist. Dazu ist die erfindungsgemäße Getriebestufen-Wälzlagervorrichtung vorgesehen, durch welche das Drehmomentabstützglied bezüglich des Getriebegehäuses drehbar gelagert ist.

Um das Drehmomentabstützglied variabel relativ zum Getriebegehäuse drehen zu können, weist das Drehmomentabstützglied erfindungsgemäß außerdem eine Verzahnung auf, welche mit einem im Getriebegehäuse drehbar gelagerten Antriebsritzel in Eingriff ist. Die Verzahnung kann ein Riemenrad oder eine Stirnradverzahnung sein. Die Stirnradverzahnung kann beispielsweise eine Geradverzahnung, eine Schrägverzahnung oder eine Doppelschrägverzahnung sein.

Das Antriebsritzel ist Teil des Getriebes, jedoch separat von der vormontierten Baugruppe. Das Antriebsritzel ist insoweit separat in dem Getriebegehäuse drehbar gelagert. In einem einfachen Falle kann das Antriebsritzel auf einer Motorwelle eines elektrischen Motors, insbesondere eines Motors der erfindungsgemäßen elektrischen Antriebsvorrichtung sitzen. Alternativ kann das Antriebsritzel von einer Verzahnung einer zweiten vormontierten Baugruppe von Antriebsglied, Abtriebsglied und Drehmomentabstützglied gebildet werden, insbesondere von der Verzahnung an dem Drehmomentabstützglied einer zweiten vormontierten Baugruppe.

Das Antriebsglied kann mittels einer Antriebsglied-Wälzlagervorrichtung an dem Abtriebsglied drehbar gelagert sein. Die Antriebsglied-Wälzlagervorrichtung kann von ein oder mehreren Rillenkugellagern, Kreuzrollenlagern, Vierpunktlagern, (Axial-/Radial-) Rollenlagern, Schrägkugellagern, Kegelrollenlager und/oder Schrägrollenlagern bzw. dessen Kombinationen gebildet werden. Der Antriebsglied-Wälzlagervorrichtung kann eine dynamische Dichtung, insbesondere wenigstens ein Radialwellendichtring zugeordnet sein, welcher einen Spalt zwischen dem Antriebsglied und dem Abtriebsglied und/oder dem Drehmomentabstützglied abdichtet.

Das Abtriebsglied kann mittels einer Abtriebsglied-Wälzlagervorrichtung an dem Drehmomentabstützglied drehbar gelagert sein. Die Abtriebsglied-Wälzlagervorrichtung kann von ein oder mehreren Rillenkugellagern, Kreuzrollenlagern, Vierpunktlagern, (Axial-/Radial-) Rollenlagern, Schrägkugellagern, Kegelrollenlager und/oder Schrägrollenlagern bzw. dessen Kombinationen gebildet werden. Der Abtriebsglied-Wälzlagervorrichtung kann eine dynamische Dichtung, insbesondere wenigstens ein Radialwellendichtring zugeordnet sein, welcher einen Spalt zwischen dem Abtriebsglied und dem Drehmomentabstützglied abdichtet.

Das Drehmomentabstützglied kann von einem das Antriebsglied und/oder das Abtriebsglied koaxial umgebenden Abstützring gebildet werden, der eine Außenumfangswand aufweist, die wenigstens eine Wälzkörper-Innenlaufbahn der Getriebestufen-Wälzlagervorrichtung trägt. Dazu kann ein separater Innenring eines Getriebestufen-Wälzlagers auf dem Drehmomentabstützglied aufgepresst oder aufgespannt sein, der die Wälzkörper-Innenlaufbahn trägt. Alternativ kann die Wälzkörper-Innenlaufbahn unmittelbar auf die Außenumfangswand des Drehmomentabstützglieds aufgebracht sein. Dabei kann die Außenumfangswand des Drehmomentabstützglieds oder zumindest der die Wälzkörper-Innenlaufbahn aufweisende Abschnitt der Außenumfangswand des Drehmomentabstützglieds vergütet und/oder gehärtet sein. Die Getriebestufen-Wälzlagervorrichtung bzw. das Getriebestufen-Wälzlager kann von ein oder mehreren Rillenkugellagern, Kreuzrollenlagern, Vierpunktlagern, (Axial-/Radial-) Rollenlagern, Schrägkugellagern, Kegelrollenlagern und/oder Schrägrollenlagern bzw. dessen Kombinationen gebildet werden. Das Drehmomentabstützglied kann eine Flanschfläche aufweisen, an der ein Abtriebsglied oder ein Antriebsglied, insbesondere ein Glied eines Roboterarms angeflanscht ist. Das Drehmomentabstützglied kann dazu ein oder mehrere Flanschbohrungen oder Stehbolzen aufweisen, um das Abtriebsglied, das Antriebsglied, insbesondere das Glied des Roboterarms anschrauben zu können. Alternativ oder zusätzlich kann das Drehmomentabstützglied auch durch Kleben und/oder ein Aufschrumpfen mit dem Abtriebsglied und/oder dem Antriebglied verbunden bzw. befestigt werden.

Die Getriebestufen-Wälzlagervorrichtung kann einen an dem Getriebegehäuse angeflanschten Außenring aufweisen, der an seiner Innenumfangswand wenigstens eine Wälzkörper-Außenlaufbahn aufweist. Dazu kann ein separater Außenring des Getriebestufen-Wälzlagers in dem Außenring eingepresst oder eingespannt sein, der die Wälzkörper-Außenlaufbahn trägt. Alternativ kann die Wälzkörper-Außenlaufbahn unmittelbar auf eine Innenumfangswand des Außenrings aufgebracht sein. Dabei kann die Innenumfangswand des Außenrings oder zumindest der die Wälzkörper-Außenlaufbahn aufweisende Abschnitt der Innenumfangswand des Außenrings vergütet und/oder gehärtet sein. Der Außenring kann eine dynamische Dichtung, insbesondere wenigstens einen Radialwellendichtring aufweisen, welcher einen Spalt zwischen dem Außenring und dem Drehmomentabstützglied abdichtet.

Das Getriebe kann eine den Außenring gegen das Getriebegehäuse abdichtende statische Dichtung aufweisen. Die statische Dichtung kann beispielsweise ein O-Ring oder eine Flachdichtung sein.

Das Getriebe kann eine den Außenring gegen das Drehmomentabstützglied abdichtende dynamische Dichtung, insbesondere einen den Außenring gegen das Drehmomentabstützglied abdichtenden Radialwellendichtring aufweisen.

Die Übersetzungsgetriebestufe kann in einer ersten Ausführungsvariante ein Spannungswellengetriebe aufweisen, das einen mit dem Drehmomentabstützglied verbundenen oder einteilig ausgebildeten starren Außenring mit einer Innenverzahnung, eine mit dem Abtriebsglied verbundene flexible Abtriebsbüchse mit einer Außenverzahnung, und einen an der flexiblen Abtriebsbüchse abwälzenden Wellengenerator umfasst, der mit dem Antriebsglied verbunden ist, wobei die Außenverzahnung der flexiblen Abtriebsbüchse in Abhängigkeit einer Drehbewegung des Wellengenerators mit der Innenverzahnung des starren Außenrings in kämmenden Eingriff ist.

Das Spannungswellengetriebe kann einen starren Außenring (Circular Spline) mit einer Innenverzahnung aufweisen, die an dem Drehmomentabstützglied angeordnet, mit diesem verbunden oder an diesem insbesondere einteilig ausgebildet ist; eine flexible Abtriebsbüchse (Flexspline) mit einer Außenverzahnung aufweisen, die mit dem Abtriebsglied der vormontierten Baugruppe verbunden ist; und einen drehbaren, an der flexiblen Abtriebsbüchse abwälzenden Wellengenerator aufweisen, der mit dem Antriebsglied der vormontierten Baugruppe verbunden ist, wobei die Außenverzahnung der flexiblen Abtriebsbüchse in Abhängigkeit einer Drehbewegung des Wellengenerators mit der Innenverzahnung des starren Außenrings in kämmenden Eingriff ist.

Das Antriebsglied der vormontierten Baugruppe kann auf der Antriebswelle eines elektrischen Motors befestigt sein. Dazu kann das Antriebsglied der vormontierten Baugruppe beispielsweise mittels eines Keilwellenprofils drehfest auf die Antriebswelle des elektrischen Motors aufgesteckt sein. Alternativ oder zusätzlich kann das Befestigen auch durch Schrumpfen, Schrauben, Kleben, mittels zumindest einer Passfeder und/oder mittels zumindest eines Konus erfolgen.

Die Übersetzungsgetriebestufe kann in einer zweiten Ausführungsvariante wenigstens eine Planetengetriebestufe aufweisen.

Die Übersetzungsgetriebestufe kann in einer dritten Ausführungsvariante wenigstens eine Zykloidgetriebestufe aufweisen.

Die Erfindung betrifft eine elektrische Antriebsvorrichtung, aufweisend einen ersten elektrischen Motor mit einer primären Antriebswelle, ein Getriebe, wie gemäß einer oder mehrere der offenbarten Ausführungen von erfindungsgemäßen Getrieben beschrieben, wobei die primäre Antriebswelle des ersten elektrischen Motors an das Antriebsglied des Getriebes angeschlossen ist und aufweisend einen zweiten elektrischen Motor mit einer sekundären Antriebswelle, die an das Antriebsritzel des Getriebes angeschlossen ist.

Die erfindungsgemäße elektrische Antriebsvorrichtung weist demgemäß wenigstens zwei elektrische Motoren und wenigstens ein Getriebe auf. Die wenigstens zwei elektrischen Motoren sind in dem Getriebegehäuse bzw. an dem Getriebegehäuse des Getriebes angeordnet, insbesondere gelagert bzw. befestigt oder angeflanscht. Der erste elektrische Motor leitet mit seiner primären Antriebswelle ein Drehmoment über das Antriebsglied in das Getriebe ein, welches durch die Übersetzungsgetriebestufe des Getriebes gewandelt auf das Abtriebsglied des Getriebes ausgeleitet wird. Das Drehmomentabstützglied wird über den zweiten elektrischen Motor mit seiner sekundären Antriebswelle angesteuert, welche sekundäre Antriebswelle mit dem Antriebsritzel gekoppelt ist, das mit der Verzahnung des Drehmomentabstützglieds in Eingriff ist. Das Antriebsritzel kann beispielsweise unmittelbar auf der sekundären Antriebswelle des zweiten elektrischen Motors aufsitzen.

Generell kann das Getriebegehäuse zumindest teilweise einen Roboterarm bzw. ein Glied des Roboterarms ausbilden. Das Getriebegehäuse kann insoweit eine tragende Funktion aufweisen, d.h. Kräfte und Momente, welche über den Roboterarm bzw. die Glieder des Roboterarms übertragen werden sollen, können über das Getriebegehäuse geleitet sein.

Dabei kann das Abtriebsglied einen Flansch aufweisen oder einen Flansch bilden, an dem ein zu bewegendes Maschinenglied, insbesondere ein Glied eines Roboterarms befestigt sein kann. Ergänzend kann das Drehmomentabstützglied einen weiteren Flansch aufweisen oder einen weiteren Flansch bilden, an dem ein zu bewegendes zweites Maschinenglied, insbesondere ein zweites Glied des Roboterarms befestigt sein kann. Das Abtriebsglied und das Drehmomentabstützglied können insbesondere koaxial zueinander angeordnet sein. Demgemäß können zwei Maschinenglieder, insbesondere zwei Glieder des Roboterarms koaxial zueinander drehbar angeordnet sein.

Die Erfindung betrifft insoweit eine elektrische Antriebsvorrichtung, aufweisend einen ersten elektrischen Motor mit einer primären Antriebswelle, ein erstes Getriebe wie beschrieben, wobei die primäre Antriebswelle des ersten elektrischen Motors über einen ersten Riementrieb an ein primäres Antriebsglied des ersten Getriebes angeschlossen ist und aufweisend einen zweiten elektrischen Motor mit einer sekundären Antriebswelle, ein zweites Getriebe aufweisend ein drehbar gelagertes sekundäres Antriebsglied, an das die sekundäre Antriebswelle des zweiten elektrischen Motors über einen zweiten Riementrieb angeschlossen ist, ein drehbar gelagertes sekundäres Drehmomentabstützglied, welches das Antriebsritzel des ersten Getriebes trägt und wenigstens eine das sekundäre Drehmomentabstützglied an das sekundäre Antriebsglied koppelnde sekundäre Übersetzungsgetriebestufe, welche ein sekundäres Abtriebsglied aufweist, wobei das sekundäre Antriebsglied zusammen mit dem sekundären Abtriebsglied und dem sekundären Drehmomentabstützglied eine zweite vormontierte Baugruppe bildet, und das sekundäre Abtriebsglied an dem Getriebegehäuse des ersten Getriebes befestigt ist.

Diese elektrische Antriebsvorrichtung weist demgemäß wenigstens zwei elektrische Motoren und wenigstens ein Getriebe auf. Die wenigstens zwei elektrischen Motoren sind in dem Getriebegehäuse bzw. an dem Getriebegehäuse des Getriebes angeordnet, insbesondere gelagert bzw. befestigt oder angeflanscht. Der erste elektrische Motor leitet mit seiner primären Antriebswelle ein Drehmoment über das primäre Antriebsglied in das Getriebe ein, welches durch die Übersetzungsgetriebestufe des Getriebes gewandelt auf das primäre Abtriebsglied des Getriebes ausgeleitet wird. Der zweite elektrische Motor leitet mit seiner sekundären Antriebswelle ein Drehmoment über das sekundäre Antriebsglied in das zweite Getriebe ein, welches durch eine eigene Übersetzungsgetriebestufe gewandelt auf das sekundäre Abtriebsglied des zweiten Getriebes ausgeleitet wird. Das sekundäre Abtriebsglied trägt in dieser Ausführungsvariante das Antriebsritzel. Das Antriebsritzel seinerseits ist mit der Verzahnung des Drehmomentabstützglieds des ersten Getriebes direkt oder indirekt, beispielsweise über ein Zwischenrad oder einen Riemen, in Eingriff. Das Drehmomentabstützglied des zweiten Getriebes ist in diesem Fall im Getriebegehäuse festgesetzt.

Dabei kann das Abtriebsglied des ersten Getriebes ein Antriebszahnrad, insbesondere ein Antriebskegelrad tragen, das mit einem Abtriebszahnrad, insbesondere ein Abtriebskegelrad direkt oder indirekt in Eingriff ist, wobei das Abtriebszahnrad bzw. das Abtriebskegelrad mit einem zu bewegenden Maschinenglied, insbesondere einem Glied eines Roboterarms verbunden ist. Im Falle eines Roboterarms kann dieses Glied ein Werkzeugflansch des Roboterarms sein. Dieser Werkzeugflansch ist dann in einem Handgehäuse des Roboterarms drehbar gelagert. Das Handgehäuse ist seinerseits dann mit dem Drehmomentabstützglied des ersten Getriebes verbunden und durch dieses drehbar gelagert. Dazu kann das Drehmomentabstützglied einen weiteren Flansch aufweisen oder einen weiteren Flansch bilden, an dem das zu bewegende Handgehäuse des Roboterarms befestigt ist.

Die Erfindung betrifft des Weiteren einen Industrieroboter aufweisend eine Robotersteuerung, die ausgebildet und/oder eingerichtet ist, ein Roboterprogramm auszuführen, sowie aufweisend einen Roboterarm mit mehreren Gliedern, die über Gelenke verbunden sind, die gemäß des Roboterprogramms automatisiert oder in einem Handfahrbetrieb automatisch verstellbar sind, und aufweisend wenigstens ein Getriebe wie gemäß einer oder mehrere der offenbarten Ausführungen von Getrieben beschrieben, und eine elektrische Antriebsvorrichtung wie gemäß einer oder mehrere der offenbarten Ausführungen von erfindungsgemäßen elektrischen Antriebsvorrichtungen beschrieben, welche elektrische Antriebsvorrichtung ausgebildet ist, wenigstens eines der Gelenke, insbesondere zwei in der kinematischen Kette unmittelbar aufeinander folgende Gelenke des Roboterarms zu verstellen.

Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind.

Der Industrieroboter weist den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Antriebe oder Motoren bewegt werden, in dem die Steuerung die Antriebe steuert bzw. regelt.

Roboterarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter ausgebildet sein.

Der Antrieb kann insbesondere ein elektrischer Antrieb sein, der einen Rotor mit einer elektrischen Rotorwicklung und einer Antriebswelle aufweist und einen Stator mit einer elektrischen Statorwicklung, die insbesondere in einem Antriebsgehäuse untergebracht sein kann. Der Rotor kann insbesondere dadurch mit einem Eingangsglied des Getriebes verbunden sein, indem die Antriebswelle, insbesondere eine Hohlwelle des Antriebs mit einer hohlen Getriebewelle des Getriebes verbunden, oder sogar einteilig mit diesem als eine gemeinsame Hohlwelle ausgebildet ist.

Generell kann ein einzelnes Gelenk des Roboterarms ein Getriebe aufweisen oder zwei oder mehrere, insbesondere auch alle Gelenke des Manipulatorarms können ein Getriebe aufweisen. Ein Gelenk ist bzw. zwei Gelenke sind repräsentativ für jegliche Gelenke des Roboterarms im Folgenden näher beschrieben.
In einer speziellen Ausführungsvariante des Industrieroboters kann der Roboterarm eine Hohlwellen-Roboterhand aufweisen, die wenigstens eine mit einem der Glieder, insbesondere dem Flansch des Roboterarms verbundene, drehbare Hohlwelle aufweist, und aufweisend ein Hohlglied, das wenigstens eine mit einem der Glieder verbundene Durchführung aufweist, sowie eine Versorgungsleitung welche sowohl durch die Durchführung als auch die Hohlwelle hindurch geführt ist, wobei ein erstes Getriebe, nach einer Ausführung wie beschrieben, und ein zweites Getriebe, nach einer Ausführung wie beschrieben, in der kinematischen Kette der mehreren Glieder und Gelenke des Roboterarms zwischen der Hohlwellen-Roboterhand und dem Hohlglied positioniert sind, und das erste Getriebe und das zweite Getriebe, sowie insbesondere auch deren zugeordnete elektrische Motoren, zur Versorgungsleitung derart versetzt in dem Glied oder an dem Glied angeordnet sind, dass in einer Gelenkstellung des Roboterarms, in der die Achse der Hohlwelle mit der Achse des Hohlglieds fluchtet, die Versorgungsleitung sich in einer geraden Ausrichtung an dem ersten Getriebe und dem zweiten Getriebe vorbeiführen lässt.

Bei dem Hohlglied kann es sich insbesondere um ein Armglied handeln, welches an einem Armgelenk um dessen Achse drehbar gelagert ist. Das erste Getriebe und das zweite Getriebe können dabei zum Bewegen zweier Handachsen ausgebildet sein. Indem sowohl das Hohlglied, als auch das erste Getriebe und das zweite Getriebe Komponenten desselben Gelenks sind, ist die geometrische Anordnung bzw. die konstruktive Anordnung des ersten Getriebes und des zweiten Getriebes bezüglich der Durchführung des Hohlglieds festgelegt. Das erste Getriebe und das zweite Getriebe, sowie insbesondere auch deren zugeordnete elektrische Motoren, sind in einer solchen Ausführungsform dann zur Achse des Hohlglieds derart versetzt angeordnet, dass die Versorgungsleitung, wenn sie in gerader Linie entlang der miteinander fluchtenden Achsen zur Hohlwelle bzw. zum Flansch des Roboterarms verläuft bzw. geführt ist, an dem ersten Getriebe und dem zweiten Getriebe ungehindert vorbeiläuft. Auch das Armglied selbst, das das Hohlglied aufweist, kann dabei eine Gestalt aufweisen, die derart ausgebildet ist, dass die Versorgungsleitung, wenn sie in gerader Linie entlang der miteinander fluchtenden Achsen zur Hohlwelle bzw. zum Flansch des Roboterarms verläuft bzw. geführt ist, ungehindert vorbeilaufen kann.

Die Versorgungsleitung kann insbesondere elektrische, hydraulische und/oder pneumatische Leitungen bzw. Kabel aufweisen. Die Versorgungsleitung kann demgemäß ein oder mehrere solcher Einzelleitungen umfassen. Die ein oder mehreren Einzelleitungen können zu einem Leitungsbündel, welches die Versorgungsleitung bildet, zusammengefasst sein. Die Versorgungsleitung kann dazu mit einem Schutzschlauch versehen sein. Der Schutzschlauch kann ein die Einzelleitungen und/oder Leitungsbündel umgebender Wellschlauch sein. Verschiedene Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.
Es zeigen:
- Fig. 1: eine perspektivische Ansicht eines Industrieroboters, der einen Roboterarm und eine Robotersteuerung aufweist,
- Fig. 2: eine Teilschnittdarstellung durch einen beispielhaften Roboterarm eines Industrieroboters, der ein Getriebe in einer vergleichbaren Ausführungsform aufweist,
- Fig. 3: eine Teilschnittdarstellung durch einen beispielhaften Roboterarm eines Industrieroboters, der ein Getriebe in einer zweiten vergleichbaren Ausführungsform aufweist,
- Fig. 4: eine Teilschnittdarstellung durch einen beispielhaften Roboterarm eines Industrieroboters, der eine erfindungsgemäße elektrische Antriebsvorrichtung bestehend aus einem erGetriebe in einer dritten Ausführungsform aufweist,
- Fig. 5: eine Teilschnittdarstellung durch einen beispielhaften Roboterarm eines Industrieroboters, der eine erfindungsgemäße elektrische Antriebsvorrichtung bestehend aus einem Getriebe in einer vierten Ausführungsform aufweist,
- Fig. 6: eine Schnittdarstellung durch eine beispielhafte Ausführungsform einer vormontierten Baugruppe des Getriebes in Alleinstellung,
- Fig. 7: eine schematische Schnittdarstellung durch eine beispielhafte Variante eines Roboterarms eines Industrieroboters, der eine erfindungsgemäße elektrische Antriebsvorrichtung bestehend aus zwei Getrieben aufweist, die versetzt zu einer Versorgungsleitung angeordnet sind, und
- Fig. 8: eine schematische Teilschnittdarstellung durch einen abgewandelten Roboterarm, bei dem das Getriebe als eine einfache Drehdurchführung ausgebildet ist.

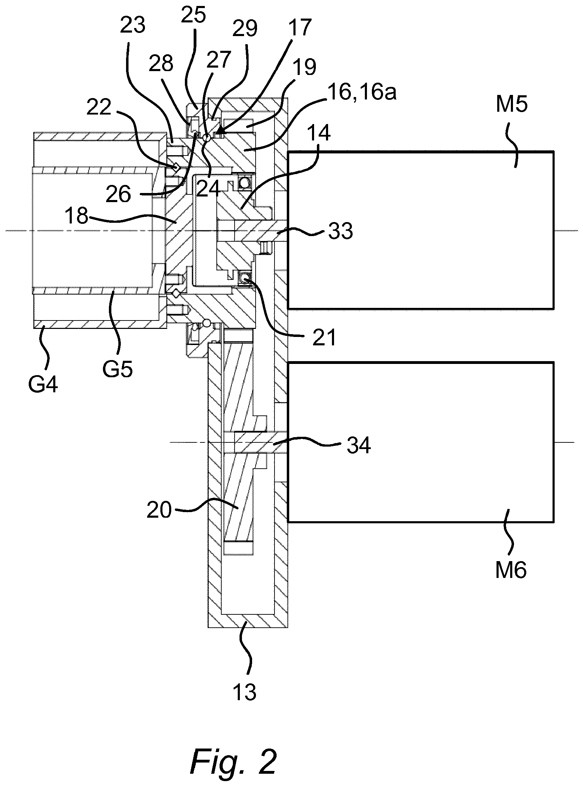

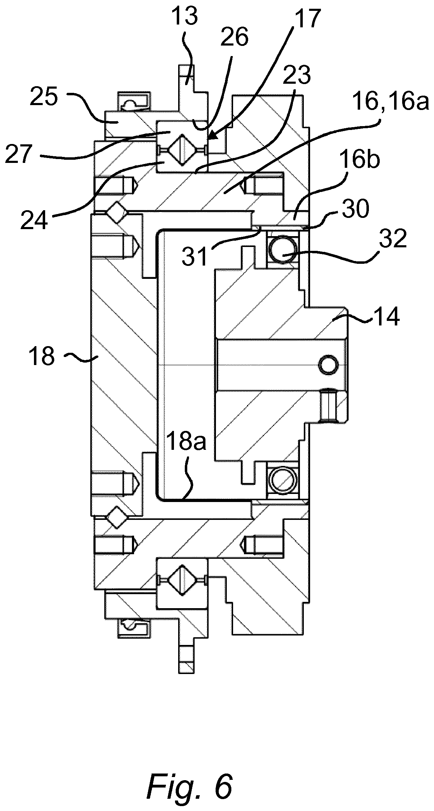

Die Figuren 2, 3, 6 und 8 zeigen vergleichbare oder teilweise Ausführungsformen, welche nicht zur Erfindung gehören.

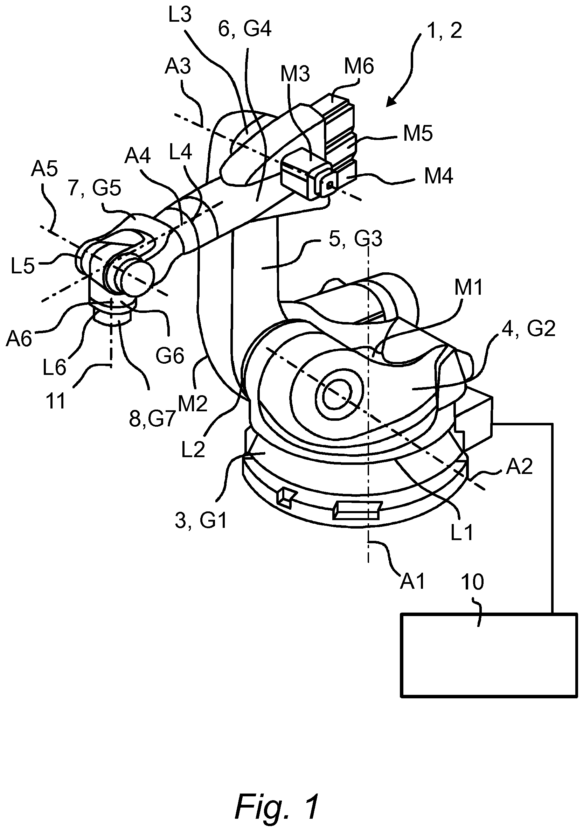

Die Fig. 1 zeigt einen Industrieroboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke L1 bis L6 drehbar miteinander verbundene Glieder G1 bis G7.

Die Robotersteuerung 10 des Industrieroboters 1 ist ausgebildet bzw. eingerichtet, ein Roboterprogramm auszuführen, durch welches die Gelenke L1 bis L6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben M1 bis M6 verbunden, die ausgebildet sind, die Gelenke L1 bis L6 des Industrieroboters 1 zu verstellen.

Bei den Gliedern G1 bis G7 handelt es sich im Falle des vorliegenden Ausführungsbeispiels um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Flansch 8 ausgeführten Befestigungsvorrichtung zum Befestigen eines Werkzeugs 11. Die Schwinge 5 ist am unteren Ende, d.h. an dem Gelenk L2 der Schwinge 5, das auch als Schwingenlagerkopf bezeichnet werden kann, auf dem Karussell 4 um eine vorzugsweise horizontale Drehachse A2 schwenkbar gelagert. Am oberen Ende der Schwinge 5 ist an dem ersten Gelenk L3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke L1 bis L6 sind durch jeweils einen der elektrischen Antriebe M1 bis M6 über die Robotersteuerung 10 programmgesteuert antreibbar. Generell kann dazu zwischen jedem der Glieder G1 bis G7 und dem jeweils zugeordneten elektrischen Antrieb M1 bis M6 ein Getriebe 12 vorgesehen sein.

In Fig. 2 ist eine erste konkrete Ausführungsform eines Getriebes 12 näher dargestellt.

Das Getriebe 12 weist ein Getriebegehäuse 13 auf. Das Getriebegehäuse 13 kann durch ein Glied G1 bis G7 des Roboterarms 2 gebildet werden. Relativ zum Getriebegehäuse 13 ist ein Antriebsglied 14 drehbar gelagert. Im dargestellten Ausführungsbeispiel wird dies dadurch erzielt, dass das Antriebsglied 14 als Teil der vormontierten Baugruppe drehbar in einer Übersetzungsgetriebestufe 15a des Getriebes 12 gelagert ist und die Übersetzungsgetriebestufe 15a ihrerseits über ein Drehmomentabstützglied 16 mittels einer Getriebestufen-Wälzlagervorrichtung 17 drehbar an dem Getriebegehäuse 13 gelagert ist. Im vorliegenden Falle ist die Übersetzungsgetriebestufe 15a als ein einstufiges Harmonic-Drive-Untersetzungsgetriebe (Spannungswellengetriebe) ausgebildet, wobei das Antriebsglied 14 durch einen Wellengenerator 32 gebildet wird.

Die Übersetzungsgetriebestufe 15a ist im Falle des Ausführungsbeispiels der Fig.2 bis Fig. 6 als ein Spannungswellengetriebe ausgebildet, das einen mit dem Drehmomentabstützglied 16 verbundenen oder einteilig ausgebildeten starren Außenring 16b mit einer Innenverzahnung 30, eine mit dem Abtriebsglied 18 verbundene flexible Abtriebsbüchse 18a mit einer Außenverzahnung 31, und den an der flexiblen Abtriebsbüchse 18a abwälzenden Wellengenerator 32 umfasst, der mit dem Antriebsglied 14 verbunden ist, wobei die Außenverzahnung 31 der flexiblen Abtriebsbüchse 18a in Abhängigkeit einer Drehbewegung des Wellengenerators 32 mit der Innenverzahnung 30 des starren Außenrings 16b in kämmenden Eingriff ist.

Relativ zum Getriebegehäuse 13 ist außerdem ein Abtriebsglied 18 drehbar gelagert. Im dargestellten Ausführungsbeispiel wird dies dadurch erzielt, dass das Abtriebsglied 18 als Teil der vormontierten Baugruppe wie das Antriebsglied 14 drehbar in der Übersetzungsgetriebestufe 15a des Getriebes 12 gelagert ist und die Übersetzungsgetriebestufe 15a ihrerseits über das Drehmomentabstützglied 16 mittels der Getriebestufen-Wälzlagervorrichtung 17 drehbar an dem Getriebegehäuse 13 gelagert ist. Im vorliegenden Falle des einstufigen Harmonic-Drive-Untersetzungsgetriebes wird das Abtriebsglied 18 durch die flexible Abtriebsbüchse 18a (Flexspline) des Harmonic-Drive-Untersetzungsgetriebes gebildet bzw. ist das Abtriebsglied 18 zumindest mit der flexiblen Abtriebsbüchse 18a (Flexspline) des Harmonic-Drive-Untersetzungsgetriebes verbunden. Der zugehörige starre Außenring 16b (Circular Spline) des Harmonic-Drive-Untersetzungsgetriebes ist mit dem Drehmomentabstützglied 16 verbunden oder sogar einteilig mit diesem ausgebildet.

Im Falle des vorliegenden Ausführungsbeispiels repräsentiert das Harmonic-Drive-Untersetzungsgetriebe eine konkrete Ausführungsform der wenigstens einen das Abtriebsglied 18 mit dem Antriebsglied 14 koppelnden Übersetzungsgetriebestufe 15a. Das Drehmomentabstützglied 16 ist Teil der Übersetzungsgetriebestufe 15a, wobei das Antriebsglied 14 zusammen mit dem Abtriebsglied 18 und dem Drehmomentabstützglied 16 eine vormontierte Baugruppe bildet. Das Drehmomentabstützglied 16 ist mittels der Getriebestufen-Wälzlagervorrichtung 17 an dem Getriebegehäuse 13 drehbar gelagert. Das Drehmomentabstützglied 16 weist außerdem eine Verzahnung 19 auf, welche mit einem im Getriebegehäuse 13 drehbar gelagerten Antriebsritzel 20 in Eingriff ist. In einer nicht näher dargestellten Abwandlung kann mit dem Antriebsritzel 20 ein Motor, insbesondere ein elektrischer Motor bzw. ein Antrieb unmittelbar über eine Antriebswelle verbunden sein. Der Motor, insbesondere der elektrische Motor oder der Antrieb kann dann ohne zwischengeschaltetem Harmonic-Drive-Untersetzungsgetriebe (Spannungswellengetriebe) mit dem Antriebsritzel 20 verbunden sein.

Das Antriebsglied 14 ist mittels einer Antriebsglied-Wälzlagervorrichtung 21 an dem Drehmomentabstützglied 16 drehbar gelagert. Das Antriebsglied 14 muss dazu nicht notwendiger Weise unmittelbar und/oder direkt an dem Drehmomentabstützglied 16 gelagert sein, sondern kann, wie in Fig. 2 dargestellt, über die flexible Abtriebsbüchse 18a (Flexspline) des Harmonic-Drive-Untersetzungsgetriebes und den starren Außenring 16b (Circular Spline) des Harmonic-Drive-Untersetzungsgetriebes mittelbar an dem Drehmomentabstützglied 16 und/oder relativ zum Drehmomentabstützglied 16 gelagert sein.

Das Abtriebsglied 18 ist mittels einer Abtriebsglied-Wälzlagervorrichtung 22 an dem Drehmomentabstützglied 16 drehbar gelagert. Im Falle des vorliegenden Ausführungsbeispiels der Fig. 2 ist das Abtriebsglied 18 tatsächlich durch die Abtriebsglied-Wälzlagervorrichtung 22 unmittelbar und/oder direkt an dem Drehmomentabstützglied 16 gelagert. In einer hier nicht dargestellten Abwandlung kann das Abtriebsglied 18 jedoch auch mittelbar an dem Drehmomentabstützglied 16 und/oder relativ zum Drehmomentabstützglied 16 gelagert sein.

Das Drehmomentabstützglied 16 wird im Falle des vorliegenden Ausführungsbeispiels von einem das Antriebsglied 14 und das Abtriebsglied 18 koaxial umgebenden Abstützring 16a gebildet wird, der eine Außenumfangswand 23 aufweist, die wenigstens eine Wälzkörper-Innenlaufbahn 24 der Getriebestufen-Wälzlagervorrichtung 17 trägt.

Die Getriebestufen-Wälzlagervorrichtung 17 umfasst außerdem einen an dem Getriebegehäuse 13 angeflanschten Außenring 25 aufweist, der an seiner Innenumfangswand 26 direkt oder indirekt, beispielsweise mittels eines Lagerrings, eine Wälzkörper-Außenlaufbahn 27 trägt. Der Außenring 25 weist darüber hinaus eine gegen das Abtriebsglied 18 bzw. gegen das Drehmomentabstützglied 16 bzw. den Abstützring 16a abdichtende dynamische Dichtung 28 auf. Die dynamische Dichtung 28 ist im vorliegenden Ausführungsbeispiel als ein Radialwellendichtring ausgeführt. Der Außenring 25 ist außerdem gegen das Getriebegehäuse 13 mittels einer statischen Dichtung 29 abgedichtet.

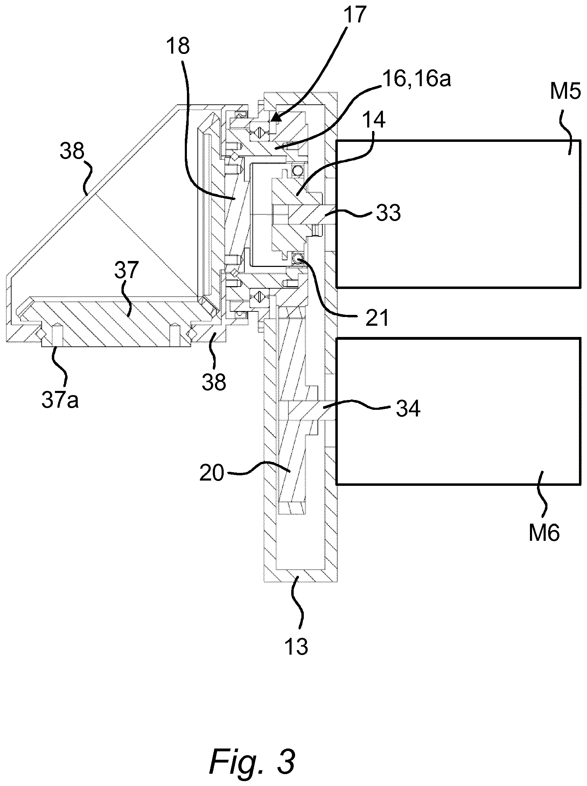

Gegenüber der in Fig.2 dargestellten ersten Ausführungsform ist in einer zweiten Ausführungsform gemäß Fig. 3 das Getriebe 12 dahingehend abgewandelt, dass an dem Abtriebsglied 18 nicht das Glied G5 befestigt ist, sondern ein Antriebskegelrad 36 befestigt ist, welches mit einem Abtriebskegelrad 37 kämmt, das einen Flansch 37a aufweist, an den ein Glied G1 bis G7 des Roboterarms 2 anschließbar ist. Dieser Flansch 37a ist in einem Handgehäuse 38 drehbar gelagert, welches Handgehäuse 38 des Roboterarms 2 mit dem Drehmomentabstützglied 16 bzw. dem Abstützring 16a verbunden ist, welches/welcher von dem zweiten elektrischen Motor M6 drehbar angetrieben wird. Im Übrigen ist das Getriebe 12 der zweiten Ausführungsform gemäß Fig. 3 jedoch weitgehend identisch zur ersten Ausführungsform gemäß Fig. 2 ausgeführt.

Durch die in Fig.2 und Fig. 3 dargestellten Anordnungen werden elektrische Antriebsvorrichtungen geschaffen, aufweisend einen ersten elektrischen Motor M5 mit einer primären Antriebswelle 33, ein Getriebe 12 wie beschrieben, wobei die primäre Antriebswelle 33 des ersten elektrischen Motors M5 an das Antriebsglied 14 des Getriebes 12 angeschlossen ist und aufweisend einen zweiten elektrischen Motor M6 mit einer sekundären Antriebswelle 34, die an das Antriebsritzel 20 des Getriebes 12 angeschlossen ist.

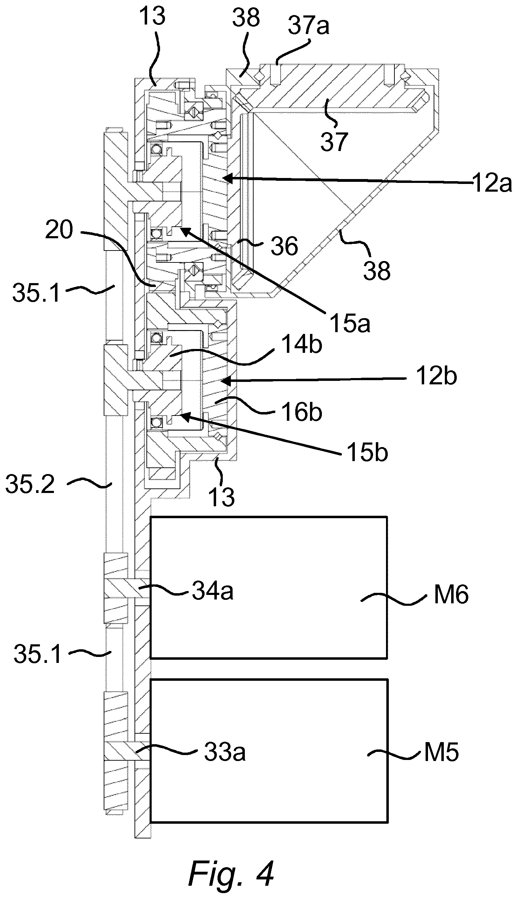

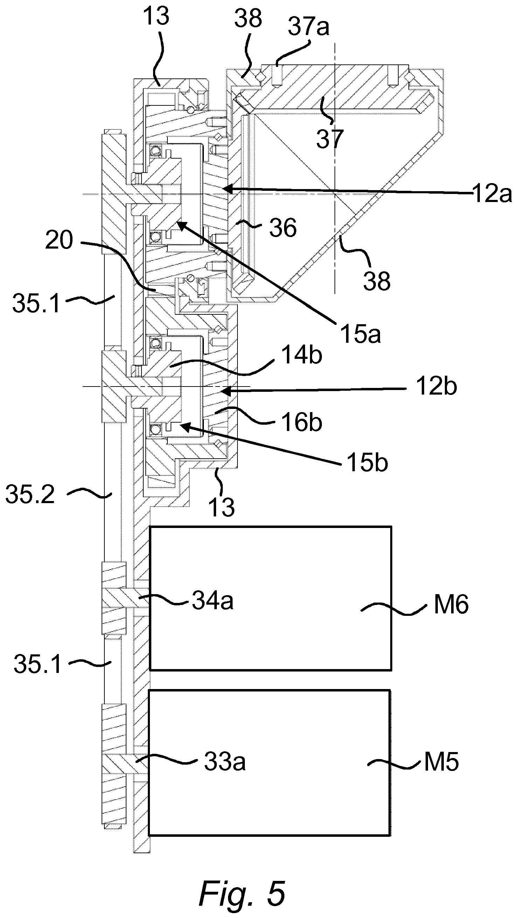

Durch die in Fig.4 und Fig. 5 dargestellten Anordnungen werden elektrische Antriebsvorrichtungen geschaffen, aufweisend einen ersten elektrischen Motor M5 mit einer primären Antriebswelle 33a, ein erstes Getriebe 12a wie beschrieben, wobei die primäre Antriebswelle 33a des ersten elektrischen Motors M5 über einen ersten Riementrieb 35.1 an ein primäres Antriebsglied 14a des ersten Getriebes 12a angeschlossen ist und aufweisend einen zweiten elektrischen Motor M6 mit einer sekundären Antriebswelle 34a, ein zweites Getriebe 12b aufweisend ein drehbar gelagertes sekundäres Antriebsglied 14b, an das die sekundäre Antriebswelle 34a des zweiten elektrischen Motors M6 angeschlossen ist, ein drehbar gelagertes sekundäres Drehmomentabstützglied 16b, welches das Antriebsritzel 20 des ersten Getriebes 12a trägt und wenigstens eine das sekundäre Abtriebsglied 18b an das sekundäre Antriebsglied 14b koppelnde sekundäre Übersetzungsgetriebestufe 15b, welche ein sekundäres Abtriebsglied 18b aufweist, wobei das sekundäre Antriebsglied 14b zusammen mit dem sekundären Abtriebsglied 18b und dem sekundären Drehmomentabstützglied 16b eine zweite vormontierte Baugruppe bildet, und das sekundäre Drehmomentabstützglied 16b an dem Getriebegehäuse 13 des ersten Getriebes 12a befestigt ist. Im Übrigen ist das Getriebe 12 der dritten und vierten Ausführungsform gemäß Fig. 4 und Fig. 5 jedoch weitgehend identisch zur ersten und zweiten Ausführungsform gemäß Fig. 2 und Fig. 3 ausgeführt.

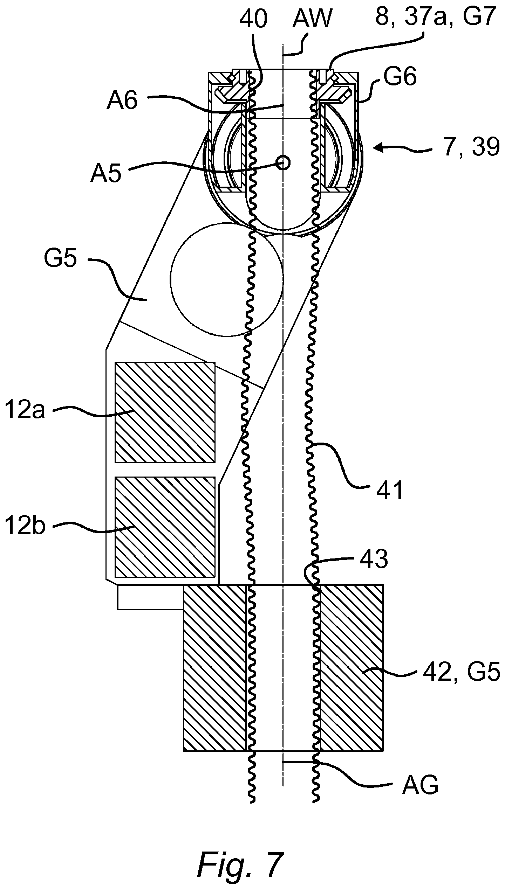

In der in Fig. 7 schematisch dargestellten Variante eines Roboterarms 2 weist dieser Roboterarm 2 eine Hohlwellen-Roboterhand 39 auf, die wenigstens eine mit einem der Glieder G5 bis G7 verbundene, drehbare Hohlwelle 40 aufweist. Im Falle des vorliegenden Ausführungsbeispiels der Fig. 7 ist die Hohlwelle 40 mit dem Flansch 8, 37a des Roboterarms 2 verbunden. Der Roboterarm 2 weist außerdem ein Hohlglied 42 auf, das wenigstens eine mit einem der Glieder G1 bis G4 verbundene Durchführung 43 aufweist. Eine Versorgungsleitung 41 ist sowohl durch die Durchführung 43 als auch die Hohlwelle 40 hindurch geführt.

Ein erstes Getriebe 12a ist in der kinematischen Kette der mehreren Glieder G1 bis G7 und Gelenke L1-L6 des Roboterarms 2 zwischen der Hohlwellen-Roboterhand 39 und dem Hohlglied 42 positioniert. Außerdem ist ein zweites Getriebe 12b in der kinematischen Kette der mehreren Glieder G1 bis G7 und Gelenke L1-L6 des Roboterarms 2 auch zwischen der Hohlwellen-Roboterhand 39 und dem Hohlglied 42 positioniert. Das erste Getriebe 12a, das zweite Getriebe 12b und die elektrischen Motoren M5 und M6 sind dabei zur Versorgungsleitung 41 derart versetzt in dem Glied 13 angeordnet, dass in einer Gelenkstellung des Roboterarms 2, in der die Achse AW der Hohlwelle 40 mit der Achse AG des Hohlglieds 42 wie in Fig. 7 gezeigt fluchtet, die Versorgungsleitung 41 sich in einer geraden Ausrichtung an dem ersten Getriebe 12a und dem zweiten Getriebe 12b sowie an den elektrischen Motoren M5 und M6 vorbeiführen lässt.

Bei dem Hohlglied 42 handelt es sich im Falle des vorliegenden Ausführungsbeispiels der Fig. 7 um das Glied G5, welches an dem Gelenk L4 um die Achse A4 drehbar gelagert ist. Das erste Getriebe 12a und das zweite Getriebe 12b sind dabei zum Bewegen der Handachsen A5 und A6, d.h. der Gelenke L5 und L6 ausgebildet. Indem sowohl das Hohlglied 42, als auch das erste Getriebe 12a und das zweite Getriebe 12b Komponenten desselben Gelenks L5 sind, ist die geometrische Anordnung bzw. die konstruktive Anordnung des ersten Getriebes 12a und des zweiten Getriebes 12b bezüglich der Durchführung 43 des Hohlglieds 42 festgelegt. Das erste Getriebe 12a und das zweite Getriebe 12b sind zur Achse AG des Hohlglieds 42 derart versetzt angeordnet, dass die Versorgungsleitung 41, wenn sie in gerader Linie entlang der miteinander fluchtenden Achsen AG und AW zur Hohlwelle 40 bzw. zum Flansch 8, 37a des Roboterarms 2 verläuft bzw. geführt ist, an dem ersten Getriebe 12a und dem zweiten Getriebe 12b sowie den elektrischen Motoren M5 und M6 ungehindert vorbeiläuft. Auch das Glied G5 selbst weist dazu eine Gestalt auf, die derart ausgebildet ist, dass die Versorgungsleitung 41, wenn sie in gerader Linie entlang der miteinander fluchtenden Achsen AG und AW zur Hohlwelle 40 bzw. zum Flansch 8, 37a des Roboterarms 2 verläuft bzw. geführt ist, ungehindert vorbeilaufen kann.

Die Versorgungsleitung 41 kann insbesondere elektrische, hydraulische und/oder pneumatische Leitungen bzw. Kabel aufweisen. Die Versorgungsleitung 41 kann demgemäß ein oder mehrere solcher Einzelleitungen umfassen. Die ein oder mehreren Einzelleitungen können zu einem Leitungsbündel, welches die Versorgungsleitung 41 bildet, zusammengefasst sein. Die Versorgungsleitung 41 kann dazu mit einem Schutzschlauch versehen sein. Der Schutzschlauch kann ein die Einzelleitungen und/oder Leitungsbündel umgebender Wellschlauch sein.

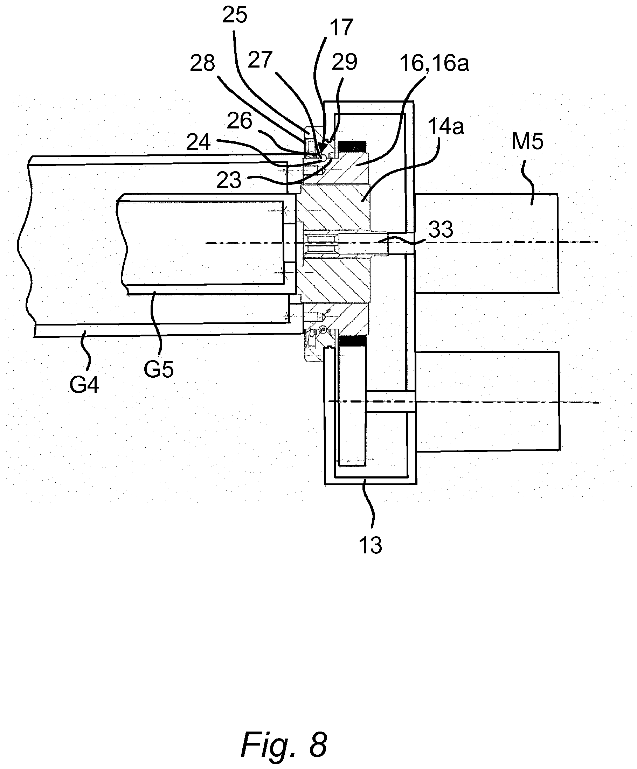

In Fig. 8 ist eine abgewandelte Ausführungsform dargestellt. Relativ zum Getriebegehäuse 13 ist eine Drehdurchführung 14a drehbar gelagert. Die Drehdurchführung 14a ist über das Drehmomentabstützglied 16 mittels der Getriebestufen-Wälzlagervorrichtung 17 drehbar an dem Getriebegehäuse 13 gelagert. Die Drehdurchführung 14a koppelt die Antriebswelle 33 unmittelbar an das Glied G5. Mittels der Drehdurchführung 14a kann insbesondere eine Getriebeübersetzung von 1 zu 1 (1:1) realisiert werden. Dies kann bedeuten, dass die Drehdurchführung 14a eine Übertragung eines Drehmoments von der Antriebswelle 33 auf das Glied G5 ermöglicht, wobei die Drehzahl von Antriebswelle 33 und Glied G5 gleich bleiben.

Das Drehmomentabstützglied 16 wird im Falle dieses Ausführungsbeispiels auch von einem die Drehdurchführung 14a koaxial umgebenden Abstützring 16a gebildet, der eine Außenumfangswand 23 aufweist, die wenigstens eine Wälzkörper-Innenlaufbahn 24 trägt. Die Getriebestufen-Wälzlagervorrichtung 17 umfasst außerdem, wie in der anderen Ausführungsform gemäß Fig. 2, einen an dem Getriebegehäuse 13 angeflanschten Außenring 25, der an seiner Innenumfangswand 26 direkt oder indirekt, beispielsweise mittels eines Lagerrings, eine Wälzkörper-Außenlaufbahn 27 trägt. Der Außenring 25 weist darüber hinaus eine gegen das Drehmomentabstützglied 16 bzw. den Abstützring 16a abdichtende dynamische Dichtung 28 auf. Die dynamische Dichtung 28 ist auch hier als ein Radialwellendichtring ausgeführt. Der Außenring 25 ist außerdem gegen das Getriebegehäuse 13 mittels einer statischen Dichtung 29 abgedichtet.

## Patentansprüche

1. Elektrische Antriebsvorrichtung, aufweisend
- einen ersten elektrischen Motor (M5) mit einer primären Antriebswelle (33a),
- ein erstes Getriebe (12a), aufweisend ein Getriebegehäuse (13), ein im Getriebegehäuse (13) drehbar gelagertes primäres Antriebsglied (14a), ein im Getriebegehäuse (13) drehbar gelagertes Abtriebsglied (18) und wenigstens eine das Abtriebsglied (18) mit dem primären Antriebsglied (14a) koppelnde Übersetzungsgetriebestufe (15a), welche ein Drehmomentabstützglied (16) aufweist, wobei das primäre Antriebsglied (14a) zusammen mit dem Abtriebsglied (18) und dem Drehmomentabstützglied (16) eine vormontierte Baugruppe bildet, bei der das Drehmomentabstützglied (16) mittels einer Getriebestufen-Wälzlagervorrichtung (17) an dem Getriebegehäuse (13) drehbar gelagert ist und eine Verzahnung (19) aufweist, welche mit einem im Getriebegehäuse (13) drehbar gelagerten Antriebsritzel (20) in Eingriff ist,
- wobei die primäre Antriebswelle (33a) des ersten elektrischen Motors (M5) über einen ersten Riementrieb (35.1) an das primäre Antriebsglied (14a) des ersten Getriebes (12a) angeschlossen ist und aufweisend einen zweiten elektrischen Motor (M6) mit einer sekundären Antriebswelle (34a), ein zweites Getriebe (12b) aufweisend ein drehbar gelagertes sekundäres Antriebsglied (14b), an das die sekundäre Antriebswelle (34a) des zweiten elektrischen Motors (M6) über einen zweiten Riementrieb (35.2) angeschlossen ist, ein drehbar gelagertes sekundäres Drehmomentabstützglied (16b), welches das Antriebsritzel (20) trägt und wenigstens eine das sekundäre Drehmomentabstützglied (16b) an das sekundäre Antriebsglied (14b) koppelnde sekundäre Übersetzungsgetriebestufe (15b), welche ein sekundäres Abtriebsglied (18b) aufweist, wobei das sekundäre Antriebsglied (14b) zusammen mit dem sekundären Abtriebsglied (18b) und dem sekundären Drehmomentabstützglied (16b) eine zweite vormontierte Baugruppe bildet, und das sekundäre Abtriebsglied (18b) an dem Getriebegehäuse (13) des ersten Getriebes (12a) befestigt ist.

2. Elektrische Antriebsvorrichtung nach Anspruch 1, bei dem das primäre Antriebsglied (14a) des ersten Getriebes (12a) mittels einer Antriebsglied-Wälzlagervorrichtung (21) an dem Abtriebsglied (18) drehbar gelagert ist.

3. Elektrische Antriebsvorrichtung nach Anspruch 1 oder 2, bei dem das Abtriebsglied (18) des ersten Getriebes (12a) mittels einer Abtriebsglied-Wälzlagervorrichtung (22) an dem Drehmomentabstützglied (16) drehbar gelagert ist.

4. Elektrische Antriebsvorrichtung nach einem der Ansprüche 1 bis 3, bei dem das Drehmomentabstützglied (16) des ersten Getriebes (12a) von einem das primäre Antriebsglied (14a) und/oder das Abtriebsglied (18) koaxial umgebenden Abstützring (16a) gebildet wird, der eine Außenumfangswand (23) aufweist, die wenigstens eine Wälzkörper-Innenlaufbahn (24) der Getriebestufen-Wälzlagervorrichtung (17) aufweist.

5. Elektrische Antriebsvorrichtung nach Anspruch 4, bei dem die Getriebestufen-Wälzlagervorrichtung (17) des ersten Getriebes (12a) einen an dem Getriebegehäuse (13) angeflanschten Außenring (25) aufweist, der an seiner Innenumfangswand (26) wenigstens eine Wälzkörper-Außenlaufbahn (27) aufweist.

6. Elektrische Antriebsvorrichtung nach Anspruch 5, **dadurch gekennzeichnet, dass** das erste Getriebe (12a) eine den Außenring (25) gegen das Getriebegehäuse (13) abdichtende statische Dichtung (29) aufweist.

7. Elektrische Antriebsvorrichtung nach Anspruch 5 oder 6, **dadurch gekennzeichnet, dass** das erste Getriebe (12a) eine den Außenring (25) gegen das Drehmomentabstützglied (16) abdichtende dynamische Dichtung (28), insbesondere einen den Außenring (25) gegen das Drehmomentabstützglied (16) abdichtenden Radialwellendichtring aufweist.

8. Elektrische Antriebsvorrichtung nach einem der Ansprüche 1 bis 7, bei dem die Übersetzungsgetriebestufe (15a) des ersten Getriebes (12a) ein Spannungswellengetriebe aufweist, das einen mit dem Drehmomentabstützglied (16) verbundenen oder einteilig ausgebildeten starren Außenring (16b) mit einer Innenverzahnung (30), eine mit dem Abtriebsglied (18) verbundene flexible Abtriebsbüchse (18b) mit einer Außenverzahnung (31), und einen an der flexiblen Abtriebsbüchse (18a) abwälzenden Wellengenerator (32) umfasst, der mit dem primären Antriebsglied (14a) verbunden ist, wobei die Außenverzahnung (31) der flexiblen Abtriebsbüchse (18a) in Abhängigkeit einer Drehbewegung des Wellengenerators (32) mit der Innenverzahnung (30) des starren Außenrings (16b) in kämmenden Eingriff ist.

9. Elektrische Antriebsvorrichtung nach einem der Ansprüche 1 bis 7, bei dem die Übersetzungsgetriebestufe (15a) des ersten Getriebes (12a) wenigstens eine Planetengetriebestufe aufweist.

10. Elektrische Antriebsvorrichtung nach einem der Ansprüche 1 bis 7, bei dem die Übersetzungsgetriebestufe (15a) des ersten Getriebes (12a) wenigstens eine Zykloidgetriebestufe aufweist.

11. Industrieroboter aufweisend eine Robotersteuerung (10), die ausgebildet und/oder eingerichtet ist, ein Roboterprogramm auszuführen, sowie aufweisend einen Roboterarm (2) mit mehreren Gliedern (G1 bis G7), die über Gelenke (L1-L6) verbunden sind, die gemäß des Roboterprogramms automatisiert oder in einem Handfahrbetrieb automatisch verstellbar sind, und aufweisend wenigstens eine elektrische Antriebsvorrichtung nach einem der Ansprüche 1 bis 10, welche elektrische Antriebsvorrichtung ausgebildet ist, wenigstens eines der Gelenke (L1-L6), insbesondere zwei in der kinematischen Kette unmittelbar aufeinander folgende Gelenke (L1-L6) des Roboterarms (2) zu verstellen.

12. Industrieroboter nach Anspruch 11, aufweisend eine Hohlwellen-Roboterhand (7, 39), die wenigstens eine mit einem der Glieder (G5 bis G7), insbesondere dem Flansch (8, 37a) des Roboterarms (2) verbundene, drehbare Hohlwelle (40) aufweist, und aufweisend ein Hohlglied (42), das wenigstens eine mit einem der Glieder (G1 bis G4) verbundene Durchführung (43) aufweist, sowie eine Versorgungsleitung (41) welche sowohl durch die Durchführung (43) als auch die Hohlwelle (40) hindurch geführt ist, wobei ein erstes Getriebe (12a), aufweisend ein Getriebegehäuse (13), ein im Getriebegehäuse (13) drehbar gelagertes primäres Antriebsglied (14a), ein im Getriebegehäuse (13) drehbar gelagertes Abtriebsglied (18) und wenigstens eine das Abtriebsglied (18) mit dem Antriebsglied (14) koppelnde Übersetzungsgetriebestufe (15a), welche ein Drehmomentabstützglied (16) aufweist, wobei das primäre Antriebsglied (14a) zusammen mit dem Abtriebsglied (18) und dem Drehmomentabstützglied (16) eine vormontierte Baugruppe bildet, bei der das Drehmomentabstützglied (16) mittels einer Getriebestufen-Wälzlagervorrichtung (17) an dem Getriebegehäuse (13) drehbar gelagert ist und eine Verzahnung (19) aufweist, welche mit einem im Getriebegehäuse (13) drehbar gelagerten Antriebsritzel (20) in Eingriff ist, und ein zweites Getriebe (12b), aufweisend ein Getriebegehäuse (13), ein im Getriebegehäuse (13) drehbar gelagertes sekundäres Antriebsglied (14b), ein im Getriebegehäuse (13) drehbar gelagertes sekundäres Abtriebsglied (18b) und wenigstens eine das sekundäre Abtriebsglied (18b) mit dem primären Antriebsglied (14a) koppelnde sekundäre Übersetzungsgetriebestufe (15b), welche ein sekundäres Drehmomentabstützglied (16b) aufweist, wobei das sekundäre Antriebsglied (14b) zusammen mit dem sekundären Abtriebsglied (18b) und dem sekundären Drehmomentabstützglied (16b) eine vormontierte Baugruppe bildet, bei der das sekundäre Drehmomentabstützglied (16b) mittels einer Getriebestufen-Wälzlagervorrichtung (17) an dem Getriebegehäuse (13) drehbar gelagert ist und das im Getriebegehäuse (13) drehbar gelagerte Antriebsritzel (20) aufweist, welches mit der Verzahnung (19) in Eingriff ist, in der kinematischen Kette der mehreren Glieder (G1 bis G7) und Gelenke (L1-L6) des Roboterarms (2) zwischen der Hohlwellen-Roboterhand (7,39) und dem Hohlglied (42) positioniert sind, und das erste Getriebe (12a) und das zweite Getriebe (12b), sowie insbesondere auch deren elektrische Motoren (M5, M6), zur Versorgungsleitung (41) derart versetzt in dem Glied (13) angeordnet sind, dass in einer Gelenkstellung des Roboterarms (2), in der die Achse (AW) der Hohlwelle (40) mit der Achse (AG) des Hohlglieds (42) fluchtet, die Versorgungsleitung (41) sich in einer geraden Ausrichtung an dem ersten Getriebe (12a) und dem zweiten Getriebe (12b) vorbeiführen lässt.

## Claims

1. Electric drive device, having
- a first electric motor (M5) with a primary drive shaft (33a),
- a first gear (12a), having a gear housing (13), a primary drive member (14a) mounted rotatably in the gear housing (13), an output member (18) mounted rotatably in the gear housing (13), and at least one translation gear stage (15a) coupling the output member (18) to the primary drive member (14a) which translation gear stage has a torque support member (16), wherein the primary drive member (14a) together with the output member (18) and the torque support member (16) forms a premounted assembly, in which the torque support member (16) is rotatably mounted by means of a gear stage rolling bearing device (17) on the gear housing (13) and has a gearing (19), which is in engagement with a drive pinion (20) mounted rotatably in the gear housing (13),
- wherein the primary drive shaft (33a) of the first electric motor (M5) is connected via a first belt drive (35.1) to the primary drive member (14a) of the first gear (12a) and having a second electric motor (M6) with a secondary drive shaft (34a), a second gear (12b) having a rotatably mounted secondary drive member (14b), to which the secondary drive shaft (34a) of the second electric motor (M6) is connected via a second belt drive (35.2), a rotatably mounted secondary torque support member (16b) which supports the drive pinion (20) and at least one secondary translation gear stage (15b) coupling the secondary torque support member (16b) to the secondary drive member (14b), which translation gear stage has a secondary output member (18b), wherein the secondary drive member (14b) together with the secondary output member (18b) and the secondary torque support member (16b) forms a second premounted assembly, and the secondary output member (18b) is secured onto the gear housing (13) of the first gear (12a).

2. Electric drive device according to claim 1, wherein the primary drive member (14a) of the first gear (12a) is mounted rotatably by means of a drive member rolling bearing device (21) on the output member (18).

3. Electric drive device according to claim 1 or 2, wherein the output member (18) of the first gear (12a) is mounted rotatably by means of an output member rolling bearing device (22) on the torque support member (16).

4. Electric drive device according to any of claims 1 to 3, wherein the torque support member (16) of the first gear (12a) is formed by a support ring (16a) coaxially surrounding the primary drive member (14a) and/or the output member (18), which support ring has an outer peripheral wall (23) which has at least one rolling element inner raceway (24) of the gear stage rolling bearing device (17).

5. Electric drive device according to claim 4, wherein the gear stage rolling bearing device (17) of the first gear (12a) has an outer ring (25) flange-mounted on the gear housing (13), which outer ring on its inner circumferential wall (26) has at least one rolling element outer raceway (27).

6. Electric drive device according to claim 5, **characterised in that** the first gear (12a) has a static seal (29) sealing the outer ring (25) from the gear housing (13).

7. Electric drive device according to claim 5 or 6, **characterised in that** the first gear (12a) has a dynamic seal (28) sealing the outer ring (25) from the torque support member (16), in particular a radial shaft sealing ring sealing the outer ring (25) from the torque support member (16).

8. Electric drive device according to any of claims 1 to 7, wherein the translation gear stage (15a) of the first gear (12a) has a strain wave gearing, which comprises a rigid outer ring (16b) which is connected to the torque support member (16) or is designed in one piece and has internal gearing (30), a flexible output sleeve (18b) which is connected to the output member (18) and has external gearing (31), and a shaft generator (32) rolling on the flexible output sleeve (18a) which shaft generator is connected to the primary drive member (14a), wherein the external gearing (31) of the flexible output sleeve (18a) depending on a rotational movement of the wave generator (32) is in meshing engagement with the internal gearing (30) of the rigid outer ring (16b).

9. Electric drive device according to any of claims 1 to 7, wherein the translation gear stage (15a) of the first gear (12a) has at least one planetary gear stage.

10. Electric drive device according to any of claims 1 to 7, wherein the translation gear stage (15a) of the first gear (12a) has at least one cycloidal gear stage.

11. Industrial robot having a robot controller (10), which is designed and/or configured, to execute a robot program, and having a robot arm (2) with a plurality of links (G1 to G7), which are connected by joints (L1-L6), which are automated according to the robot program or are automatically adjustable in a manual operating mode, and having at least one electric drive device according to any of claims 1 to 10, which electric drive device is designed to adjust at least one of the joints (L1-L6), in particular two joints (L1-L6) of the robot arm (2) which are immediately behind one another in the kinematic chain.

12. Industrial robot according to claim 11, having a hollow shaft robot hand (7, 39), which has at least one rotatable hollow shaft (40) connected to one of the links (G5 to G7), in particular the flange (8, 37a) of the robot arm (2), and having a hollow member (42), which has at least one feedthrough (43) connected to one of the links (G1 to G4), and a supply line (41) which is guided through both the feedthrough (43) and also the hollow shaft (40), wherein a first gear (12a) having a gear housing (13) has a primary drive member (14a) mounted rotatably in the gear housing (13), an output member (18) mounted rotatably in the gear housing (13) and a least one transmission gear stage (15a) coupling the output member (18) to the drive member (14), which has a torque support member (16), wherein the primary drive member (14a) together with the output member (18) and the torque support member (16) forms a premounted assembly, in which the torque support member (16) is mounted rotatably by means of a gear stage rolling bearing device (17) on the gear housing (13) and has a gearing (19), which is in engagement with a drive pinion (20) mounted rotatably in the gear housing (13), and a second gear (12b) having a gear housing (13), a secondary drive member (14b) mounted rotatably in the gear housing (13), a secondary output member (18b) mounted rotatably in the gear housing (13), and at least one secondary translation gear stage (15b) coupling the secondary output member (18b) to the primary drive member (14a), which translation gear stage has a secondary torque support member (16b), wherein the secondary drive member (14b) together with the secondary output member (18b) and the secondary torque support member (16b) forms a premounted assembly, in which the secondary torque support member (16b) is mounted rotatably by means of a gear stage rolling bearing device (17) on the gear housing (13) and the drive pinion (20) mounted rotatably in the gear housing (13) which is in engagement with the gearing (19) are positioned in the kinematic chain of the plurality of links (G1 to G7) and joints (L1-L6) of the robot arm (2) between the hollow shaft robot hand (7, 39) and the hollow member (42), and the first gear (12a) and the second gear (12b), and in particular also their electric motors (M5, M6), are arranged offset in the member (13) relative to the supply line such that in a joint position of the robot arm (2) in which the axis (AW) of the hollow shaft (40) is aligned with the axis (AG) of the hollow member (42), the supply line (41) can be guided in a straight alignment past the first gear (12a) and the second gear (12b).

## Revendications

1. Dispositif d'entraînement électrique présentant
- un premier moteur électrique (M5) avec un arbre d'entraînement primaire (33a),
- un premier engrenage (12a), présentant un carter d'engrenages (13), un élément d'entraînement primaire (14a) monté rotatif dans le carter d'engrenages (13), un élément de sortie (18) monté rotatif dans le carter d'engrenage (13) et au moins un étage d'engrenage de transmission (15a) couplant l'élément de sortie (18) à l'élément d'entraînement primaire (14a), lequel présente un élément de support de couple (16), l'élément d'entraînement primaire (14a) formant conjointement avec l'élément de sortie (18) et l'élément de support de couple (16) un ensemble préassemblé, dans lequel l'élément de support de couple (16) est monté rotatif sur le carter d'engrenages (13) au moyen d'un dispositif à roulements d'étage d'engrenage (17) et présente une denture (19) qui s'engrène avec un pignon d'entraînement (20) monté rotatif dans le carter d'engrenage (13),
- l'arbre d'entraînement primaire (33a) du premier moteur électrique (M5) étant entraîné par un premier entraînement par courroie (35.1) à l'élément d'entraînement primaire (14a) du premier engrenage (12a) et présentant un deuxième moteur électrique (M6) avec un arbre d'entraînement secondaire (34a), un deuxième engrenage (12b) présentant un élément d'entraînement secondaire (14b) monté rotatif, auquel l'arbre d'entraînement secondaire (34a) du deuxième moteur électrique (M6) est relié par un deuxième entraînement à courroie (35.2), un élément de support de couple secondaire (16b) monté rotatif qui porte le pignon d'entraînement (20) et au moins un étage d'engrenage de transmission secondaire (15b) qui couple l'élément de support de couple secondaire (16b) à l'élément de transmission secondaire (14b) et qui présente un élément de sortie secondaire (18b), l'élément d'entraînement secondaire (14b) formant, conjointement avec l'élément de sortie secondaire (18b) et l'élément de support de couple secondaire (16b) un deuxième assemblage préassemblé, et l'élément de sortie secondaire (18b) étant fixé au carter d'engrenage (13) du premier engrenage (12a).

2. Dispositif d'entraînement électrique selon la revendication 1, dans lequel l'élément d'entraînement primaire (14a) du premier engrenage (12a) est monté rotatif sur l'élément de sortie (18) au moyen d'un dispositif de roulement d'élément d'entraînement (21).

3. Dispositif d'entraînement électrique selon la revendication 1 ou 2, dans lequel l'élément de sortie (18) du premier engrenage (12a) est monté rotatif sur l'élément de support de couple (16) au moyen d'un dispositif de roulement d'élément de sortie (22).

4. Dispositif d'entraînement électrique selon l'une des revendications 1 à 3, dans lequel l'élément de support de couple (16) du premier engrenage (12a) est formé par une bague de support (16a) qui entoure coaxialement l'élément d'entraînement primaire (14a) et/ou l'élément de sortie (18) et qui présente une paroi périphérique extérieure (23) qui présente au moins une piste de roulement intérieure (24) de corps de roulement du dispositif à roulements d'étage d'engrenage (17).

5. Dispositif d'entraînement électrique selon la revendication 4, dans lequel dispositif à roulements d'étage d'engrenage (17) du premier engrenage (12a) présente une bague extérieure (25) qui est montée par bride sur le carter d'engrenages (13) et présente sur sa paroi périphérique intérieure (26) au moins une piste de roulement extérieure (27) de corps de roulement.

6. Dispositif d'entraînement électrique selon la revendication 5, **caractérisé en ce que** le premier engrenage (12a) présente un joint statique (29) qui assure l'étanchéité de la bague extérieure (25) contre le carter d'engrenages (13).

7. Dispositif d'entraînement électrique selon la revendication 5 ou 6, **caractérisé en ce que** le premier engrenage (12a) présente un joint dynamique (28) qui assure l'étanchéité de la bague extérieure (25) contre l'élément de support de couple (16), en particulier un joint d'arbre radial qui assure l'étanchéité de la bague extérieure (25) contre l'élément de support de couple (16).

8. Dispositif d'entraînement électrique selon l'une quelconque des revendications 1 à 7, dans lequel l'étage d'engrenage de transmission (15a) du premier engrenage (12a) présente un engrenage à onde de déformation qui comprend une bague extérieure (16b) rigide reliée à l'élément de support de couple (16) ou réalisée d'une seule pièce, comportant une denture intérieure (30), une douille de sortie flexible (18b) comportant une denture extérieure (31) et reliée à l'élément de sortie (18), et un générateur d'ondes (32) roulant sur la douille de sortie flexible (18a), qui est relié à l'élément d'entraînement primaire (14a), la denture extérieure (31) de la douille de sortie flexible (18a) s'égrenant avec la denture intérieure (30) de la bague extérieure rigide (16b) en fonction d'un mouvement de rotation du générateur d'ondes (32).

9. Dispositif d'entraînement électrique selon l'une des revendications 1 à 7, dans lequel l'étage d'engrenage de transmission (15a) du premier engrenage (12a) présente au moins un étage d'engrenage planétaire.

10. Dispositif d'entraînement électrique selon l'une quelconque des revendications 1 à 7, dans lequel l'étage d'engrenage de transmission (15a) du premier engrenage (12a) présente au moins un étage d'engrenage cycloïdal.

11. Robot industriel présentant une commande de robot (10) qui est réalisée et/ou conçue pour exécuter un programme de robot, et présentant un bras de robot (2) ayant une pluralité d'éléments (G1 à G 7) qui sont reliés via des articulations (L1-L6) qui sont automatisées selon le programme de robot ou automatiquement réglables dans une opération manuelle, et présentant au moins un dispositif d'entraînement électrique selon l'une des revendications 1 à 10, lequel dispositif d'entraînement électrique est réalisé pour déplacer au moins l'une des articulations (L1-L6), en particulier deux articulations (L1-L6) du bras du robot (2) qui sont directement successives dans la chaîne cinématique.

12. Robot industriel selon la revendication 11, présentant une main de robot à arbre creux (7, 39) qui présente au moins un arbre creux (40) rotatif, relié avec l'un des éléments (G5 à G7), en particulier la bride (8, 37a) du bras de rotor (2), et présentant un élément creux (42) qui présente au moins un passage (43) relié avec l'un des éléments (G1 à G4), ainsi qu'une conduite d'alimentation (41) qui passe à la fois à travers le passage (43) et à travers l'arbre creux (40), dans lequel un premier engrenage (12a) présentant un carter d'engrenage (13), un élément d'entraînement primaire (14a) monté rotatif dans le carter d'engrenage (13), un élément de sortie (18) monté rotatif dans le carter d'engrenage (13) et au moins un étage d'engrenage de transmission (15a) couplant l'élément de sortie (18) à l'élément d'entraînement (14), qui présente un élément de support de couple (16), l'élément d'entraînement primaire (14a) formant, conjointement avec l'élément de sortie (18) et l'élément de support de couple (16) un ensemble préassemblé, dans lequel l'élément de support de couple (16) est monté rotatif sur le carter d'engrenages (13) au moyen d'un dispositif à roulements d'étage d'engrenage (17) et présente une denture (19) qui s'engrène avec un pignon d'entraînement (20) monté rotatif dans le carter d'engrenage (13), et un deuxième engrenage (12b), présentant un carter d'engrenage (13), un élément d'entraînement secondaire (14b) monté rotatif dans le carter d'engrenage (13), un élément de sortie secondaire (18b) monté rotatif dans le carter d'engrenage (13) et au moins un étage d'engrenage de transmission secondaire (15b) couplant l'élément de sortie secondaire (18b) à l'élément d'entraînement primaire (14a), lequel présente un élément de support de couple secondaire (16b), l'élément d'entraînement secondaire (14b) formant, conjointement avec l'élément de sortie secondaire (18b) et l'élément de support de couple secondaire (16b) un groupe préassemblé dans lequel l'élément de support de couple secondaire (16b) est monté rotatif sur le carter d'engrenages (13) au moyen d'un dispositif à roulements d'étage d'engrenage (17) et présente le pignon d'entraînement (20) monté rotatif dans le carter d'engrenage (13), qui s'engrène avec la denture (19), sont positionnés, dans la chaîne cinématique de la pluralité d'éléments (G1 à G7) et d'articulations (L1-L6) du bras de robot (2) entre la main de robot à arbre creux (7, 39) et l'élément creux (42), et le premier engrenage (12a) et le deuxième engrenage (12b), ainsi qu'en particulier aussi leurs moteurs électriques (M5, M6), sont agencés dans l'élément (13) avec un décalage tel par rapport à la conduite d'alimentation (41) que dans une position d'articulation du bras de robot (2), dans laquelle l'axe (AW) de l'arbre creux (40) est en alignement avec l'axe (AG) de l'élément creux (42), la conduite d'alimentation (41), dans un alignement droit, longe le premier engrenage (12a) et le deuxième engrenage (12b).
